# EUROPÄISCHE PATENTSCHRIFT

(11) **EP 2 016 470 B1**
(45) Veröffentlichungstag und Bekanntmachung des Hinweises auf die Patenterteilung: **21.12.2011**
(21) Anmeldenummer: 07728963.5
(22) Anmeldetag: 10.05.2007
(51) Int. Cl.: G05B 19/045

(54) **BEDIENGERÄT ZUM INFORMATIONSAUSTAUSCH MIT EINEM FELDGERÄT IN EINEM AUTOMATISIERUNGSSYSTEM**
OPERATOR PANEL FOR EXCHANGING DATA WITH A FIELD DEVICE IN AN AUTOMATION SYSTEM
TERMINAL DE COMMANDE POUR L'ECHANGE D'INFORMATIONS AVEC UN APPAREIL SUR SITE DANS UN SYSTEME D'AUTOMATISATION

(30) Priorität: 10.05.2006 DE 102006021767
(43) Veröffentlichungstag der Anmeldung: 21.01.2009
(73) Patentinhaber: SIEMENS AKTIENGESELLSCHAFT, 80333 München (DE)
(72) Erfinder: GROSS, Stefan, 76706 Dettenheim (DE)
(86) Internationale Anmeldenummer: PCT/EP2007/054511
(87) Internationale Veröffentlichungsnummer: WO 2007/128836

(56) Entgegenhaltungen:
- DE-A1- 10 223 966
- DE-A1- 19 940 078
- US-A- 5 161 115

## Beschreibung

Die Erfindung betrifft ein Bediengerät zum Informationsaustausch mit einem Feldgerät nach dem Oberbegriff des Anspruchs 1.

Aus der DE 199 40 078 A1 ist ein Verfahren und System zur automatisierten Steuerung eines Chargen- oder Batch-Prozesses bekannt. Dazu enthält ein Batch-Server ein Software-Prozedurmodell, in dem die Prozeduren zur Herstellung der Charge in Form von hierarchisch gegliederten Prozedurelementen beschrieben sind. Zumindest die hierarchisch untersten Prozedurelemente (sog. Phasen) sind als Zustandsmaschinen implementiert, welche Prozesszustände und Übergänge zwischen diesen definieren. Durch Programmablauf werden die Prozedurelemente ausführt, wobei die untersten Prozedurelemente mit physikalischen Elementen, z. B. Controller (PLC = speicherprogrammierbare Steuerung), kommunizieren und diese steuern. Um diese Kommunikation und Steuerung zu verbessern enthalten die Controller ebenfalls Zustandsmaschinen, die die Zustandsmaschinen in dem Batch-Server widerspiegeln; d h. die Zustandsmaschinen in dem Batch-Server synchronisieren die entsprechenden Zustandsmaschinen in den Controllern. Da der Anwender die Batch-Verarbeitung von dem Batch-Server aus initialisiert, können im weiteren Sinne der Batch-Server als Bediengerät und der Controller als Feldgerät aufgefasst werden.

In Automatisierungssystemen für technische oder industrielle Anlagen, z. B. der Prozessindustrie, Produktions- und, Fertigungsindustrie, Gebäudetechnik oder Netzwerktechnik, führen in der betreffenden Anlage örtlich verteilte, dezentrale Feldgeräte (Prozessgeräte) vorgegebene Funktionen im Rahmen der Anlagenautomatisierung aus und tauschen dabei prozess-, anlagen- und/oder geräterelevante Informationen ggf. untereinander, immer aber mit übergeordneten Komponenten des Automatisierungssystems, insbesondere dessen Leit- bzw. Engineeringsystem, aus. Zu den Feldgeräten gehören u. a. Messumformer für Druck, Temperatur, Durchfluss, Füllstand usw., Analysengeräte für Gas- oder Flüssigkeitsanalyse, Wägesysteme, Stellantriebe, Stellungsregler für Ventile, sonstige dezentrale Regler, und Frequenzumrichter für elektromotorische Antriebe. Zum Austausch der Daten innerhalb des Automatisierungssystems sind die Feldgeräte im dezentralen Peripheriebereich, ggf. zusammen mit dezentraler Steuerung und Regelung und Bedienung und Beobachtung, über Feldbusse oder andere Kommunikationswege miteinander verbunden, wobei unterschiedliche Feldbusse über Buskoppler miteinander verbunden sind. Die Feldbusse können wiederum über Steuereinrichtungen, wie z. B. speicherprogrammierbare Automatisierungsgeräte, an einem zentralen Anlagenbus angebunden sein, an dem auch das Leit- bzw. Engineeringsystem, also die zentrale Steuerung, Regelung, Bedienung und Beobachtung, angeschlossen ist.

Feldgeräte besitzen in der Regel einstellbare Geräteparameter wie z. B. Grenzwerte für Alarme oder Warnungen, Kalibrierkurven, Parameter in Auswertungsalgorithmen zur Signalverarbeitung usw. Die Geräteparameter lassen sich je nach Gerätetyp oder Hersteller auf unterschiedliche Art und Weise einstellen und verändern, so über Eingabemittel, wie ein Tastenpanel, direkt am Feldgerät und/oder mittels spezieller Software-Programme, die auf einem Host-Rechner installiert sind und über die Kommunikationsschnittstelle des Feldgeräts mit diesem kommunizieren. In zunehmendem Maße werden für die Vorortbedienung von dem Feldgerät abgesetzte Badiengerätgeräte, beispielsweise sog. Handhelds, verwendet, die vorzugsweise drahtlos mit dem Feldgerät kommunizieren. Die Geräteparameter werden bei ihrer Eingabe oder Änderung über Anzeigemittel an dem Bediengerät und/oder Feldgerät visualisiert, wobei über die Anzeigemittel in der Regel auch weitere Prozess-, Geräte-und Anlageninformationen, wie z. B. Prozessmesswerte, darstellbar sind. Mit einem Bediengerät lassen sich auch mehrere Feldgeräte, auch solche unterschiedlichen Typs oder von unterschiedlichen Herstellern, bedienen.

Für einen komplexen Informationsaustausch zwischen dem Bediengerät und dem Feldgerät, wenn also z. B. von dem Bediengerät an das Feldgerät Kommandos und Parameter und umgekehrt von dem Feldgerät an das Bediengerät Rückmeldungen bzw. Quittierungen sowie Prozessmesswerte und Gerätedaten oftmals mit aufwendigen Übertragungsprotokollen übertragen werden, muss in dem Feldgerät ein beträchtliches Maß an zusätzlicher Prozessorleistung und Energie bereitgestellt werden. Dies ist insbesondere auch dann der Fall, wenn beispielsweise ganze Bildschirminhalte von dem Feldgerät an das Bediengerät übertragen werden.

Der Erfindung liegt daher die Aufgabe zugrunde, diesen Aufwand für den Informationsaustausch zwischen dem Bediengerät und dem Feldgerät zu verringern.

Gemäß der Erfindung wird die Aufgabe durch das in Anspruch 1 angegebene Bediengerät gelöst.

Aufgrund der Synchronisierung des Zustandsaggregats durch die Zustandsmaschine nimmt das Bediengerät immer den gleichen Zustand wie das Feldgerät ein, so dass dem Bediengerät der aktuelle Zustand des Feldgeräts bekannt ist. Informationen, die ausschließlich zustandsbezogen sind, brauchen daher nicht mehr zwischen beiden Geräten ausgetauscht zu werden, so dass dadurch der auszutauschende Informationsumfang wesentlich reduziert wird. Wenn sich beispielsweise das Feldgerät in einem Zustand befindet, in dem Druckmesswerte an das Bediengerät übertragen werden sollen, genügt es, die reinen Zahlenwerte zu übertragen, weil dem Bediengerät bekannt ist, dass es sich bei den empfangenen Zahlenwerten um Druckmesswerte und nicht etwa um Durchflussmesswerte oder Parameterwerte handelt.

Die zwischen dem Bediengerät und dem Feldgerät ausgetauschten Informationen sind in dem jeweils empfangenden Gerät mit dort vorhandenen zustandsabhängigen Zusatzinformationen verknüpfbar und/oder weiterverarbeitbar. Dies gilt insbesondere auch für die Art und Weise, wie empfangene Informationen anzuzeigen sind. Es müssen also keine ganzen Anzeigeinhalte mehr übertragen werden sondern nur noch die anzuzeigenden Werte, die dann von dem empfangenden Gerät zustandsabhängig für die Anzeige aufbereitet werden, also z. B. in einer von dem empfangenden Gerät zustandsabhängig erzeugten Maske dargestellt werden.

Soll beispielsweise ein bestimmter Parameter in dem Feldgerät eingestellt werden, so erhält dieses von dem Bediengerät zunächst ein Kommando, das die Zustandsmaschine in dem Feldgerät dazu veranlasst, in einen Zustand überzugehen, der für die Einstellung oder Veränderung von Parametern vorgesehen ist. Ein solches Kommando kann sicherheitsgerichtet, z. B. passwortgeschützt, sein, um unbefugtes Verändern von Parametern zu verhindern. Jetzt müssen an das Feldgerät nur noch der Typ des Parameters und sein Wert übertragen werden, nicht aber ein Befehl, der beinhaltet, dass ein Parameter eingetragen oder verändert werden soll. Sind darüber hinaus für unterschiedliche Parametertypen unterschiedliche Zustände vorgesehen, so muss auch nicht mehr der jeweilige Parametertyp übertragen werden, weil er aufgrund des Zustandes bekannt ist.

Die Synchronisation des Zustandsaggregats in dem Bediengerät kann zeitabhängig durch zyklische Übertragung einer Kennung des jeweils aktuellen Zustands des Feldgeräts an das Bediengerät erfolgen.

Vorzugsweise erfolgt die Synchronisation ereignisgesteuert bei jeden Zustandsübergang des Feldgeräts, indem die Kennung des neuen Zustands an das Bediengerät übertragen wird.

Der Empfang der Kennung wird vorzugsweise von dem Bediengerät quittiert, wobei im Falle des Ausbleibens der Quittierung oder bei einen fehlerhaft quittierten Zustand das Feldgerät die Kennung des aktuellen Zustands erneut an das Bediengerät überträgt.

Zur weiteren Erläuterung der Erfindung wird im Folgenden auf die Figuren der Zeichnung Bezug genommen; im Einzelnen zeigen:
- Figur 1: ein Beispiel für ein Automatisierungssystem mit Feldgeräten und einem Bediengerät.
- Figur 2: in einem Diagramm ein Beispiel für die Zustandsmaschine in einem der Feldgeräte und das Zustandsaggregat in dem Bediengerät.

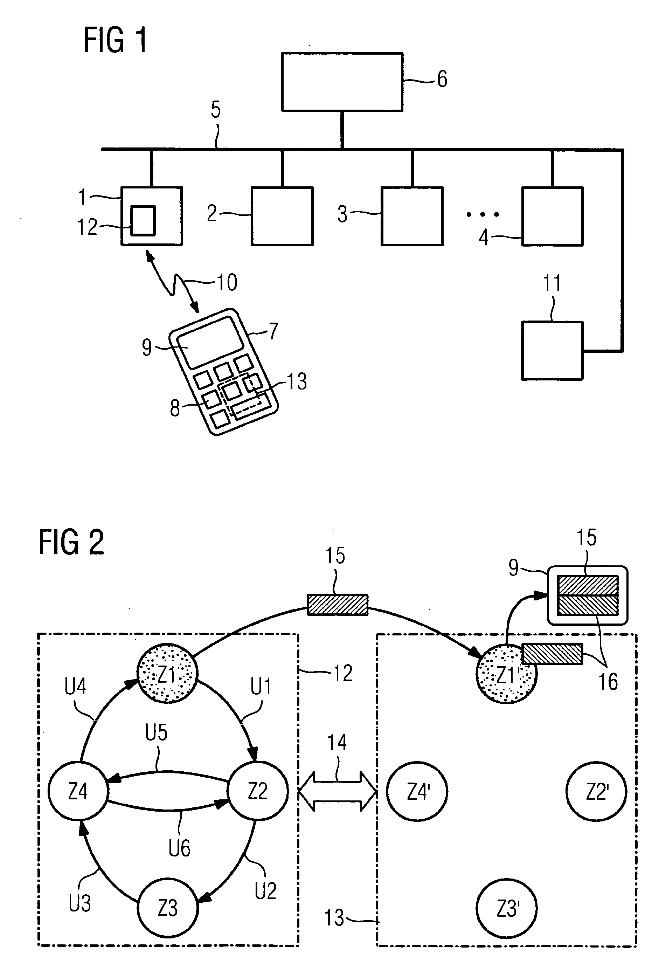

Figur 1 zeigt ein Automatisierungssystem mit einem Feldgerät 1, beispielsweise einen Messumformer, das zusammen mit weiteren Feld- und Automatisierungsgeräten 2, 3 und 4 über einen Kommunikationsbus 5 mit einer übergeordneten Steuereinrichtung 6 verbunden ist. Im Produktivbetrieb des Automatisierungssystems erfolgt über den Kommunikationsbus 5 ein Austausch von Nutzdaten zwischen den Komponenten 1 bis 4 und 6.

Ein tragbares Bediengerät 7 (sog. Handheld) mit Bedienelementen 8 und einer Anzeigevorrichtung 9 ist dazu ausgebildet, über eine Funkverbindung 10 mit jedem einzelnen der Feldgeräte 1 bis 4 zu kommunizieren. Diese Kommunikation kann unmittelbar mit den Feldgeräten 1 bis 4 oder über einen Zugangspunkt (Access Point) 11 erfolgen, der ebenfalls an dem Bus 5 angeschlossen ist.

Die Feldgeräte 1 bis 4 sind über das Bediengerät 7 parametrierbar, welches dazu über die Bedienelemente 8 und die Anzeigevorrichtung 9 die Eingabe, Änderung und Verifizierung von Parametern der Feldgeräte 1 bis 4 sowie die Eingabe von Kommandos ermöglicht. Auf der Anzeigevorrichtung 9 können neben den änderbaren Parametern auch Prozessmesswerte und andere Informationen aus dem Automatisierungssystem angezeigt werden, die von den Feldgeräten 1 bis 4 an das Bediengerät 7 übertragen werden.

Wie am Beispiel des Feldgeräts 1 gezeigt ist, enthalten die Feldgeräte jeweils eine Zustandsmaschine 12, die die über das Bediengerät 7 vorgenommenen Benutzerhandlungen oder -aktionen hinsichtlich der Reihenfolge und auch der Zeit überwacht, automatisch einen Schreib- oder Passwortschutz aktiviert, den Benutzer veranlasst, vorgenommene Einstellungen zu bestätigen, und den Produktivbetrieb des Feldgeräts 1, also den Nutzdatenaustausch mit den anderen Komponenten 2 bis 4 und 6 des Automatisierungssystems, erst dann akzeptiert, wenn bestimmte vorgegebene Aktionen abgeschlossen sind.

Das Bediengerät 7 enthält ein Zustandsaggregat 13, welches durch die Zustandsmaschine 12 des Feldgeräts 1 synchronisiert, d. h. mit dieser abgeglichen wird.

Wie Figur 2 anhand eines sehr vereinfachten Beispiels zeigt, weist die Zustandsmaschine 12 des Feldgeräts 1 eine vorgegebene Anzahl von Zuständen Z1 bis Z4 mit vorgegebenen Übergängen U1 bis U6 zwischen den Zuständen Z1 bis Z4 auf. Das Zustandsaggregat 13 in dem Bediengerät 7 weist in Zahl und Typ entsprechende Zustände Z1' bis Z2' auf. Wie durch einen Doppelpfeil 14 angedeutet ist, wird das Zustandsaggregat 13 durch die Zustandmaschine 12 synchronisiert, indem bei jedem Zustandsübergang, z. B. U4, des Feldgeräts 1 eine Kennung des neuen Zustands, z. B. Z1, über die Funkverbindung 10 an das Bediengerät 7 übertragen wird, was daraufhin den Empfang der Kennung quittiert und den Zustand Z1' einnimmt.

Im vorliegenden Beispiel sei angenommen, dass in dem Zustand Z1 bzw. Z1' ein bestimmter Messwert, z. B. Temperaturmesswert, aus dem Feldgerät 1 in einer Darstellungsmaske auf der Anzeigevorrichtung 9 des Bediengeräts 7 dargestellt werden soll. Über die Funkverbindung 10 wird der reine Messwert (Zahlenwert) 15 an das Bediengerät 7 übertragen und dort mit in dem Bediengerät 7 abgespeicherten oder von diesem über den Zugangspunkt 11 aus dem Automatisierungssystem angeforderten Zusatzinformationen wie der Darstellungsmaske und dem Messwerttyp, hier Temperatur, verknüpft und zur Anzeige gebracht.

Zustandswechsel in dem Feldgerät 1 können durch Eingaben an dem Feldgerät 1 oder dem Bediengerät 7 ausgelöst werden, wobei im letzteren Fall das Bediengerät 7 ein entsprechendes Kommando erzeugt und an das Feldgerät 1 überträgt.

## Patentansprüche

1. Bediengerät zum Informationsaustausch mit einem Feldgerät (1) in einem Automatisierungssystem, wobei das Bediengerät (7) ein Zustandsaggregat (13) enthält, dessen einzelne Zustände (Z1' bis Z4') den Zuständen (Z1 bis Z4) einer in dem Feldgerät (1) enthaltenen Zustandsmaschine (12) entsprechen, **dadurch gekennzeichnet, dass** das Zustandsaggregat (13) durch die Zustandsmaschine (12) derart synchronisierbar ist, dass der aktuelle Zustand (z. B. Z1') des Bediengeräts (7) dem aktuellen Zustand (z. B. Z1) des Feldgeräts (1) entspricht, und dass der auszutauschende Informationsumfang auf nichtzustandsbezogene Informationen reduziert ist, die in dem jeweils empfangenden Gerät (1, 7) mit dort vorhandenen zustandsabhängigen Zusatzinformationen (16) verknüpfbar sind.

2. Bediengerät nach Anspruch 1, **dadurch gekennzeichnet, dass** das Zustandsaggregat (13) zeitabhängig durch zyklische Übertragung einer Kennung des jeweils aktuellen Zustands (z. B. Z1) des Feldgeräts (1) an das Bediengerät (7) synchronisierbar ist.

3. Bediengerät nach Anspruch 1, **dadurch gekennzeichnet, dass** das Zustandsaggregat (13) bei jedem Zustandsübergang (U1 bis U6) des Feldgeräts '(1) ereignisgesteuert durch Übertragung einer Kennung des jeweils neuen Zustands (z. B. Z1) des Feldgeräts (1) an das Bediengerät (7) synchronisierbar ist.

4. Bediengerät nach Anspruch 1 oder 2, **dadurch gekennzeichnet, dass** der Empfang der Kennung durch das Bediengerät (7) quittierbar ist.

5. Bediengerät nach einem der vorangehenden Ansprüche, **dadurch gekennzeichnet, dass** für anzuzeigende Informationen die Zusatzinformationen (16) die Art und Weise der Anzeige beinhalten.

## Claims

1. Operating device for the exchange of data with a field device (1) in an automation system, where the operating device (7) contains a status unit (13), the individual statuses of which (Z1' to Z4') correspond to the states (Z1 to Z4) of a state machine (12) contained in the field device (1),
**characterised in that** the status unit (13) can be synchronised by the state machine (12) in such a way that the current state (e.g. Z1') of the operating device (7) corresponds to the current state (e.g. Z1) of the field device (1), and that the scope of information to be exchanged is reduced to non-state-related information which can be combined in the relevant receiving device (1, 7) with state-/status-dependent additional data (16) available there.

2. Operating device according to claim 1, **characterised in that** the status unit (13) can be synchronised on a timed basis by the cyclic transmission to the operating device (7) of a code for the relevant current state (e.g. Z1) of the field device (1).

3. Operating device according to claim 1, **characterised in that** the status unit (13) can be synchronised on an event-controlled basis, each time there is a state transition (U1 to U6) for the field device (1), by the transmission to the operating device (7) of a code for the relevant new state (e.g. Z1) of the field device (1).

4. Operating device according to claim 1 or 2, **characterised in that** receipt of the code by the operating device (7) can be acknowledged.

5. Operating device according to one of the previous claims, **characterised in that** the additional data (16) for data which is to be displayed includes how it is to be displayed.

## Revendications

1. Appareil de commande pour l'échange d'information avec un appareil ( 1 ) sur site dans un système d'automatisation, dans lequel l'appareil ( 7 ) de commande comporte une unité ( 13 ) d'état dont les divers états ( Z1' à Z4') correspondent aux états ( Z1 à Z4) d'une machine ( 12 ) d'état contenus dans l'appareil ( 1 ) sur site, **caractérisé en ce que** l'unité ( 13 ) d'état peut être synchronisée par la machine ( 12) d'état de manière à ce que l'état ( par exemple Z1' ) instantanée de l'appareil ( 7 ) de commande correspond à l'état ( par exemple Z1 ) instantanée de l'appareil ( 1 ) sur site et **en ce que** la quantité d'informations qui s'échange est réduite à des informations ne se rapportant pas à l'état, qui peuvent être combinées dans l'appareil ( 1, 7 ) respectivement récepteur à des informations ( 16 ) supplémentaires qui s'y trouvent et qui dépendent de l'état.

2. Appareil de commande suivant la revendication 1, **caractérisé en ce que** l'unité ( 13 ) d'état peut être synchronisée en fonction du temps par une transmission cyclique d'une caractéristique de l'état ( par exemple Z1 ) instantané respectif de l'appareil ( 1 ) sur site à l'appareil ( 7 ) de commande.

3. Appareil de commande suivant la revendication 1, **caractérisé en ce que** l'unité ( 13 ) d'état peut, à chaque transmission ( U1 à U6 ) d'état de l'appareil ( 1 ) sur site, être synchronisée, en étant commandée par l'évènement, par transmission d'une caractéristique d'un nouvel état ( par exemple Z1 ) respectif de l'appareil ( 1 ) sur site à l'appareil ( 7 ) de commande.

4. Appareil de commande suivant la revendication 1 ou 2, **caractérisé en ce qu'**il peut être accusé réception de la caractéristique par l'appareil ( 7 ) de commande.

5. Appareil de commande suivant l'une des revendications précédentes, **caractérisé en ce que**, pour des informations à afficher, les informations ( 16 ) supplémentaires contiennent le type de l'affichage.
